# EUROPEAN PATENT APPLICATION

(11) **EP 0 951 193 A2**
(43) Date of publication of application: **20.10.1999**
(21) Application number: 99107670.4
(22) Date of filing: 16.04.1999
(51) Int. Cl.: H04Q 7/38

(54) **Method for identifying the user of a portable phone in a mobile communication system**

(30) Priority: 17.04.1998 KR 9813788
(71) Applicant: SAMSUNG ELECTRONICS CO., LTD., Suwon-City, Kyungki-do (KR)
(72) Inventor: Yang, Jae-duk, Kumi-shi, Kyongsangbuk-do (KR)
(74) Representative: Grünecker, Kinkeldey, Stockmair & Schwanhäusser Anwaltssozietät

(57) **Abstract**

Manual and automatic user identification methods are provided for identifying a user of a portable phone in a mobile communication system. The manual identification method includes the steps of providing power to the portable phone; inputting an identification password and a characteristic number or code using a keypad of the portable phone; transmitting the identification password and the characteristic number to a mobile switching center of the mobile communication system; determining if the transmitted identification password and the characteristic number correspond to a respective user of the mobile communication system; and transmitting at least one control signal via the mobile communication system to the portable phone to place the portable phone in a usable mode, if it is determined that the transmitted identification password and the characteristic number correspond to the user. The automatic identification method includes the steps of providing power to the portable phone; automatically transmitting to a mobile switching center of a mobile communication system identification data stored within a memory of the portable phone; determining if the transmitted identification data corresponds to a respective user of the mobile communication system; and transmitting at least one control signal via the mobile communication system to the portable phone to place the portable phone in a usable mode, if it is determined that the transmitted identification data con-esponds to the user.

## Description

### BACKGROUND

### 1. Field of the Invention

The present invention relates to a method for identifying the user of a portable phone in a mobile communication system, and in particular, to a method for identifying the user of a portable phone in a mobile communication system through a network access process.

### 2. Description of the Related Art

Generally, in a mobile communication system, a portable phone can only be used after an identification process is executed from a network. For example, in the case of a Global System for Mobile (GSM) communications portable phone, data necessary for subscriber identification which is stored in a Subscriber Identification Module (SIM) provided within the GSM portable phone is transmitted to a network. Subscriber identification data typically includes information relating to registration, payment and password. After the subscriber identification data is transmitted from the SIM ofthe GSM portable phone, the network identifies whether the user of the respective portable phone is a recognized or normal user. If the user of the portable phone is identified as a normal user, the GSM portable phone can then be used.

There are two disadvantages regarding the SIM of the GSM portable phone. First, since the SIM card should be provided for the purpose of transmitting subscriber identification, the subscriber cannot use the GSM portable phone when he does not have the SIM card. Second, because the GSM portable phone must be provided with an SIM card connector which is relatively larger than the GSM portable phone, the compactness of the GSM portable phone is compromised.

In another example, for a conventional CDMA (Code Division Multiple Access) portable phone, a subscriber to a mobile communication network obtains the right to use the CDMA portable phone from a network manager. The user does not have to go through a subscriber identification process. Accordingly, the CDMA portable phone user cannot be provided with services that are only provided to users who go through the subscriber identification process.

It is therefore an object ofthe present invention to provide a method for identifying a user of a portable phone in a mobile communication system through a network access process.

It is another object of the present invention to provide a method for identifying a user of a GSM portable phone in a mobile communication system through a network access process without using a SIM card.

It is still another object ofthe present invention to provide a method for identifying a user of a CDMA portable phone in a mobile communication system through a network access process.

It is still another object ofthe present invention to provide a method for identifying a user of a portable phone in a mobile communication system through a network access process and identification data stored within an interior memory of the portable phone.

It is yet another object of the present invention to provide a method for identifying a user of a portable phone in a mobile communication system through a network access process and a characteristic number inputted into the portable phone.

### SUMMARY

To achieve the above objects, manual and automatic user identification methods are provided for identifying a user of a portable phone in a mobile communication system. The manual identification method utilizes a network access method, a user identification password, and a characteristic number or code which is inputted to the portable phone. The method includes the steps ofproviding power to the portable phone; inputting the identification password and the characteristic number using a keypad of the portable phone; transmitting the identification password and the characteristic number to a mobile switching center ofthe mobile communication system; determining if the transmitted identification password and the characteristic number correspond to a respective user of the mobile communication system; and transmitting at least one control signal via the mobile communication system to the portable phone to place the portable phone in a usable mode, if it is determined that the transmitted identification password and the characteristic number correspond to the user.

The automatic identification method utilizes a network access method and data identifying a respective user of the portable phone which is stored in an interior memory of the portable phone. The method includes the steps of providing power to the portable phone; automatically transmitting to a mobile switching center of a mobile communication system identification data stored within a memory of the portable phone; determining if the transmitted identification data corresponds to a respective user of the mobile communication system; and transmitting at least one control signal via the mobile communication system to the portable phone to place the portable phone in a usable mode, if it is determined that the transmitted identification data corresponds to the user.

### BRIEF DESCRIPTION OF THE DRAWINGS

FIG. 1 is a block diagram of a mobile communication system in which the present invention is applied;
FIG. 2 is a flowchart illustrating a manual identification process for identifying a user of a portable phone according to an embodiment of the present invention; and
FIG. 3 is a flowchart illustrating an automatic identification process for identifying a user of a portable phone according to another embodiment of the present invention.

### DETAILED DESCRIPTION OF PREFERRED EMBODIMENTS

It is to be understood that in the following description ofpreferred embodiments, specific details are set forth to provide a more thorough understanding of the present invention, notwithstanding that one skilled in the art may practice the invention without these specific details. It is to be further understood that in the accompanying drawings, similar reference numerals are used to denote elements having similar or equivalent constructions. In the following description, well known functions or constructions may not be described in detail since they would obscure the invention in unnecessary detail.

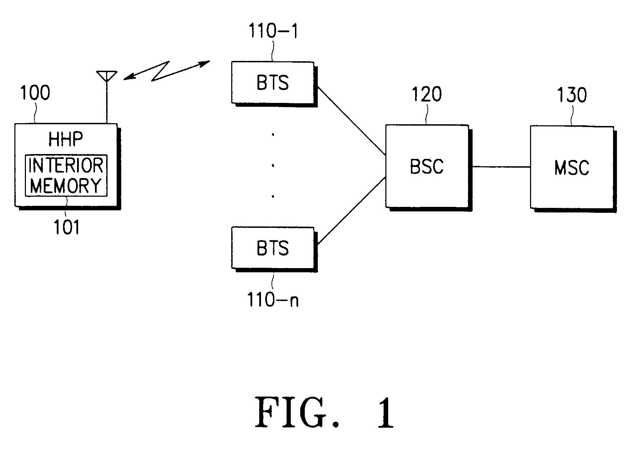

With reference to FIG. 1 there is shown a block diagram illustrating a mobile communication system in which the present invention is applied. The mobile communication system includes a HHP (Hand-Held Phone) 100 having an interior memory 101, BTSs (Base Transceiver Systems) 110-1 through 110-n, a BSC (Base Station Controller) 120, and a MSC (Mobile Switching Center) 130.

The HHP 100 transmits user identification data stored in the interior memory 101 to the BTSs 110-1 through 110-n according to a user identification process. The interior memory 101 can be embodied through an EEPROM (Electrically Erasable Programmable Read Only Memory) to store data necessary for user identification. The BTSs 110-1 through 110-n receive user identification data from the HHP 100 and transmit the received user identification data to the MSC 130 via the BSC 120. The MSC 130 searches to determine if the transmitted user identification data corresponds with a respective user in an effort to identify the user.

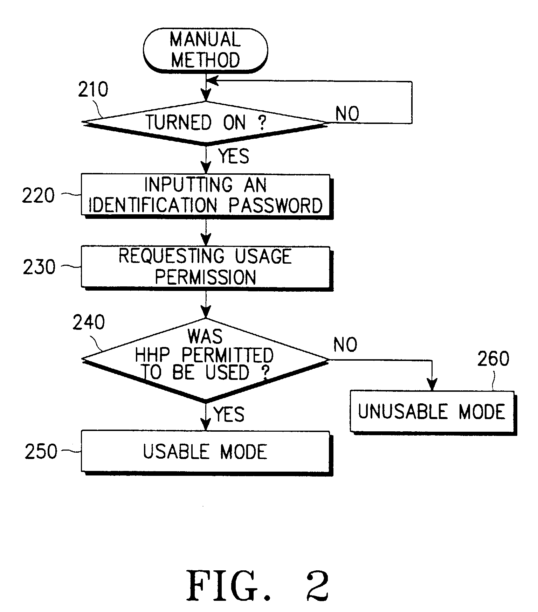

FIG. 2 is a flowchart illustrating a manual user identification process according to an embodiment of the present invention. The manual user identification process can be used for the purpose of a hand-handy phone lending service, where the portable phone is provided to be used by a new user. After a user subscribes to the mobile communication service, he is provided with his personal characteristic number or code. In case ofa hand-handy phone lending service, a new user who is provided with a portable phone must go through a user manual identification process to obtain his characteristic number in order to use the hand-handy phone.

The manual identification method will now be described in detail with reference to FIGS. 1 and 2. In step 210, the HHP 100 ascertains whether or not it is turned on. If it is turned on, a radio channel is formed between the HHP 100 and one of the BTSs 110-1 through 110-n. As a result, the HHP 100 is connected to a mobile communication network. The mobile communication network requires a user identification password to be inputted to the HHP 100 in order for the user to be able to use the HHP 100. The user inputs a user identification password into the HHP 100 using a keypad of the HHP 100 in order for the user to be identified as a subscriber to the mobile communication service. After the user identification password is inputted, the HHP 100 transmits the inputted identification password to the mobile communication network. If the correct identification password is transmitted to the network, the MSC 130 transmits at least one control signal to the HHP 100 to permit the user to use the HHP 100.

For example, with reference to FIG. 2, in step 220, a user inputs his characteristic number using the keypad of the HHP 100. In step 230, the HHP 100 transmits the characteristic number and other data necessary for identification which is stored in the interior memory 101 to the MSC 130 in order to request a usage permission from the network. Upon reception of the above information, the MSC 130 determines if the received infonnation corresponds to a specific, normal user. The MSC 130 then transmits at least one control signal or usage permission data to the HHP 100. In step 240, the HHP 100 receives the usage permission data from the MSC 130 and determines if it is permitted to be used. Ifthe HHP 100 is permitted to be used, the HHP 100 is placed in a usable mode in step 250. If the HHP 100 cannot be used, the HHP 100 is placed in an unusable mode in step 260.

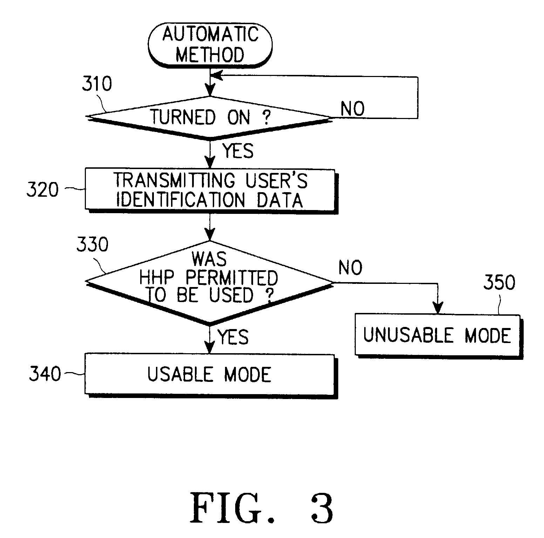

FIG. 3 illustrates an automatic user identification process according to another embodiment of the present invention. The automatic user identification process can be utilized in case where a user has his own hand-handy phone. In the case of the automatic user identification process, the HHP 100 stores its characteristic identification number or code in the interior memory 101. The characteristic number or code is automatically transmitted to a network of the mobile communication system once the HHP 100 is turned on. Accordingly, there is no need for the user to input a password in order for the system to identify the user.

Referring to FIGS. 1 and 3, the automatic user identification method will be described in detail. At step 310, it is determined if the HHP 100 is turned on. If the HHP 100 is turned on, a radio channel is formed between the HHP 100 and one of the BTSs 110-1 through 110-n. As a result, the HHP 100 is connected to a mobile communication network. At step 320, the user 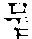 identification data stored within the interior memory 101 of the HHP 100 is automatically transmitted to the MSC 130. Upon receiving the identification data, the MSC 130 ascertains whether the user is a subscriber or a normal user. The MSC 130 then transmits at least one control signal or usage permission data to the HHP 100. In step 330, the HHP 100 receives the usage permission data from the MSC 130 and determines whether or not it is permitted to be used. If the HHP 100 is pennitted to be used, the HHP 100 is placed in a usable mode in step 340. If the HHP 100 is not permitted to be used, the HHP 100 is placed in an unusable mode in step 350.

In the novel identification methods according to the present invention, since user identification data is inputted using the keypad of the hand-handy phone or is stored in the interior memory of the hand-handy phone, user identification is realized without using a SIM card. Therefore, it is possible to decrease the size of the hand-handy phone.

Furthermore, the identification of a user of the hand-handy phone can be realized when the user is not a subscriber ofthe mobile communication network through the user identification methods of the present invention. For example, identification data can be inputted and transmitted to the MSC which is known to correspond to a particular subscnber of the network when the user cannot use his identification data because the user is not a recognized user of the network. The user can also transmit identification data which corresponds to a particular subscriber ifthe user desires a particular service which he cannot access through his calling plan. Therefore, if he knows that the particular service is available to an individual subscriber, the user can use the subscriber 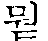 identification data to access the particular service, if the user is authorized to do so by the subscriber. It is contemplated that the user identification methods of the present invention can be used in any type of mobile communication network operating using TDMA, CDMA, and other communication protocols.

While this invention has been described in connection with what is presently considered to be the most practical and preferred embodiment, it is to be understood that the invention is not limited to the disclosed embodiment. The invention can cover various modifications within the spirit and scope of the appended claims.

## Claims

1. A method for identifying a user of a portable phone in a mobile communication system, the method comprising the steps of:
providing power to the portable phone;
inputting an identification password and a characteristic code using a keypad of the portable phone;
transmitting the identification password and the characteristic code to a mobile switching center of the mobile communication system;
determining ifthe transmitted identification password and the characteristic code correspond to a respective user of the mobile communication system; and
transmitting at least one control signal via the mobile communication system to the portable phone to place the portable phone in a usable mode, if it is determined that the transmitted identification password and the characteristic code correspond to the user.

2. The method according to claim 1, wherein the mobile communication system operates in a TDMA protocol.

3. The method according to claim 1, wherein the mobile communication system operates in a CDMA protocol.

4. The method according to claim 1, wherein the at least one control signal is transmitted by at least one base station transceiver.

5. The method according to claim 1, further comprising the step of transmitting a control signal to the portable phone to place the portable phone in a unusable mode, if it is determined that the transmitted identification password and the characteristic code do not correspond to the user.

6. A method for identifying a user of a portable phone in a mobile communication system, the method comprising the steps of:
providing power to the portable phone;
automatically transmitting to a mobile switching center of a mobile communication system identification data stored within a memory of the portable phone;
determining if the transmitted identification data corresponds to a respective user of the mobile communication system; and
transmitting at least one control signal via the mobile communication system to the portable phone to place the portable phone in a usable mode, if it is determined that the transmitted identification data corresponds to the user.

7. The method according to claim 6, wherein the mobile communication system operates using a TDMA protocol.

8. The method according to claim 6, wherein the mobile communication system operates using a CDMA protocol.

9. The method according to claim 6, wherein the at least one control signal is transmitted by at least one base station transceiver.

10. The method according to claim 6, further comprising the step of transmitting a control signal to the portable phone to place the portable phone in a unusable mode, if it is determined that the transmitted identification password and the characteristic code do not correspond to the user.
